# EUROPÄISCHE PATENTSCHRIFT

(11) **EP 0 897 346 B1**
(45) Veröffentlichungstag und Bekanntmachung des Hinweises auf die Patenterteilung: **19.09.2001**
(21) Anmeldenummer: 97923786.4
(22) Anmeldetag: 05.05.1997
(51) Int. Cl.: B60R 1/04

(54) **MANUELL VERSTELLBARER SPIEGEL**
MANUALLY-ADJUSTABLE MIRROR
RETROVISEUR INTERIEUR REGLABLE MANUELLEMENT

(30) Priorität: 07.05.1996 DE 19620157
(43) Veröffentlichungstag der Anmeldung: 24.02.1999
(73) Patentinhaber: Magna Reflex Holding GmbH, 97959 Assamstadt (DE)
(72) Erfinder: HEINZ, Jürgen, D-97959 Assamstadt (DE); HEMPEL, Thomas, D-71636 Ludwigsburg (DE)
(74) Vertreter: Pfenning, Meinig & Partner
(86) Internationale Anmeldenummer: DE9700920
(87) Internationale Veröffentlichungsnummer: WO9742054

(56) Entgegenhaltungen:
- EP-A- 0 287 993
- DE-A- 3 244 777
- DE-A- 4 322 937
- PATENT ABSTRACTS OF JAPAN vol. 11, no. 213 (M-605) [2660] , 10.Juli 1987 & JP 62 031540 A (HONDA), 10.Februar 1987,
- PATENT ABSTRACTS OF JAPAN vol. 8, no. 54 (M-282) [1491] , 10.März 1984 & JP 58 206441 A (KANTOU JIDOUSHIYA)

## Beschreibung

Die Erfindung bezieht sich auf einen manuell verstellbaren Spiegel mit einer Vorrichtung zur Erfassung seiner Stellung nach dem Oberbegriff des Anspruchs 1 wie er aus der JP-A-58 206 441 bekannt ist.

Es sind manuell verstellbare Innenspiegel bekannt (JP-A-58 206441, JP-A-62 031540), die Vorrichtungen zur Bestimmung ihrer Orientierung relativ zu dem Kraftfahrzeug aufweisen. Dabei sind zum Beispiel als variable Widerstände ausgebildete Sensoren als Winkelgeber mit dem Innenspiegel in Wirkverbindung, die außerhalb des Innenspiegels angebracht sind. Die von der Vorrichtung zur Erfassung der Stellung des Spiegels gemessenen Werte werden beispielsweise verwendet, um die Stellung eines anderen Spiegels, wie beispielsweise eines Außenspiegels, auf die Sitzposition und die Sicht des Fahrers in Abhängigkeit von der Orientierung des Innenspiegels einzustellen.

Folglich können dem Fahrer durch eine genaue Einstellung des Innenspiegels automatisch die Außenspiegel positioniert werden, so daß stets ein optimales Rückblickfeld gewährleistet ist.

Derartige Systeme stellen dem KFZ-System ganz allgemein Informationen über die Größe, die Sitzposition, die Blickrichtung und das Blickfeld des Fahrers zur Verfügung. Daher können auch andere Funktionen, die von der Fahrerposition bzw. von der Blickrichtung bzw. dem Blickfeld des Fahrers abhängen durch die über die Innenspiegelposition gewonnenen Informationen beeinflußt und gesteuert werden.

Mechanisch abblendbare Spiegel (DE 32 44 777 A1) müssen nicht nur relativ zum Spiegelfuß drehbar sein, um die Spiegelposition der Fahrerposition anzupassen. Zusätzlich muß die Spiegelfläche um einen definierten Winkel um die Spiegelquerachse drehbar sein, um den Spiegel abzublenden. Daher ist das Spiegelgehäuse und das Spiegelglas über ein Drehgelenk, ein Kniegelenk und einen Kipphebel drehbar an einer Kalotte befestigt, welche wiederum zusammen mit einer am Spiegelfuß befestigten Kugel ein in alle Richtungen drehbares Kugelgelenk bildet.

Die Umschaltung von Tag- auf Nachtfahrt zur Vermeidung von störenden Reflexionen durch das Scheinwerferlicht von nachfolgenden Kraftfahrzeugen erfolgt durch Betätigung des Kipphebels, mit dessen Hilfe das Spiegelgehäuse und das Spiegelglas um einen vorbestimmten Winkel um die Fahrzeugquerachse gedreht werden.

Wird die Stellung des Spiegelglases relativ zum Fahrzeug erfaßt, so wird auch die für die Geometrie des optischen Weges vom Fahrer zum Spiegel und nach hinten unwesentliche Kippbewegung bei der Tag-/Nachtumschaltung erfaßt, so daß sich bei der Nachführung der Einstellung der Außenspiegel Fehler ergeben.

Aufgabe der vorliegenden Erfindung ist es, einen manuell verstellbaren Spiegel mit zugeordneter Vorrichtung zur Erfassung seiner Stellung zu schaffen, der keine außenliegenden und getrennt vom Spiegel zu montierenden und auch optisch störenden Teile aufweist und flach ausgebildet ist, und bei dem weiterhin ein Kippen des Spiegelelementes zur Umschaltung zwischen Tag- und Nachtfahrt die gemessene Spiegelposition nicht beeinflußt. Weiterhin soll die erfindungsgemäße Vorrichtung sicher, zuverlässig und einfach konstruiert sein sowie Messungen mit guter Genauigkeit liefern.

Diese Aufgabe wird durch die erfindungsgemäße Vorrichtung nach dem Oberbegriff des Anspruchs 1 in Verbindung mit seinen kennzeichnenden Merkmalen gelöst.

Dadurch, daß Meßwertaufnehmer und Einwirkelement innerhalb des Spiegelgehäuses angeordnet sind, sind keine außenliegenden Sensoren vorgesehen, die optisch störend sind bzw. eine zusätzliche Montage bedürfen. Weiterhin bleibt durch die Unterbringung der Sensoren in dem Spiegelgehäuse eine flache Bauweise des Spiegels erhalten.

Dadurch, daß die Meßwertaufnehmer fest an einem Befestigungselement angeordnet sind, zu dem zum Abblenden das Spiegelgehäuse schwenkbar ist, und die Einwirkelemente mit dem Spiegelfuß verbunden sind, werden lediglich Bewegung des Befestigungselementes relativ zum Spiegelfuß erfaßt. Selbstverständlich kann die Zuordnung der Meßwertaufnehmer und der auf die Meßwertaufnehmer einwirkenden Vorrichtung zu dem Spiegelfuß und zu dem Befestigungselement auch umgekehrt sein.

Bei der Umschaltung von Tag- auf Nachtfahrt über einen Kipphebel wird das Spiegelelement nun zwar relativ zu dem Spiegelfuß etwa um die Fahrzeugquerachse gedreht, dabei bewegt sich jedoch das Befestigungselement nicht. Folglich wird diese Kippbewegung nicht erfaßt und die Meßwerte bleiben unverändert, wie ja auch die Geometrie des Sehstrahls vom Fahrer über den Spiegel nach hinten bei der Tag-/Nachtumschaltung unverändert bleibt.

Vorteilhafte Weiterbildungen des erfindungsgemäßen Kraftfahrzeugspiegels werden in den abhängigen Ansprüchen beschrieben.

Dadurch, daß lediglich Drehungen des Kraftfahrzeugspiegels um in der Spiegelebene liegende Achsen gemessen werden, wird eine Drehung des Spiegels um die Normale zur Spiegeloberfläche nicht erfaßt. Derartige Drehungen führen auch lediglich zu einer Veränderung des Blickfeldes des Fahrers, die beispielsweise für die Positionierung der Außenspiegel nicht wesentlich ist. Folglich wird die Zahl der erfaßten Meßwerte auf die geringste benötigte Zahl begrenzt, wodurch sich der konstruktive Aufwand und die Baugröße der erfindungsgemäßen Vorrichtung weiter verringert.

Vorteilhafterweise können elektrische Meßwertaufnehmer verwendet werden, beispielsweise Schiebepotentiometer bzw. Drehpotentiometer. Die Dreh- bzw. Schiebepotentiometer können durch Koppelstangen betätigt werden, die über ein Drehgelenk an dem Spiegelfuß angelenkt sind. Durch geeignete Anordnung der Koppelstangen kann erreicht werden, daß lediglich Bewegungen um die auf der Normalen zur Spiegelfläche senkrecht stehenden Achsen auf die Meßwertaufnehmer übertragen werden.

Besonders zuverlässig, sicher und kostengünstig ist die Verwendung von Hallelementen als Meßwertaufnehmer an dem Befestigungselement, denen am Spiegelfuß bzw. auf Koppelstangen magnetische Elemente, die auf die Hallsensoren einwirken, zugeordnet sind. Die Hallelemente können selbstverständlich auch am Spiegelfuß bzw. an den Koppelstangen und die magnetischen Elemente an dem Befestigungselement angeordnet sein. Derartige Konstruktionen eignen sich insbesondere zur berührungslosen verschleißarmen Übertragung der Bewegungen des Spiegels auf die Meßwertaufnehmer.

Ist das Befestigungselement über ein Kugelgelenk mit dem Spiegelfuß verbunden, eignen sich als Meßwertaufnehmer Laufrollen als Drehungsimpulsgeber, die an der Kalotte reibungskraftschlüssig mit der Kugel der drehbaren Spiegelbefestigung angebracht sind. Bei dieser Ausführungsform wirkt die Kugel der drehbaren Spiegelbefestigung selbst als Vorrichtung zur Einwirkung auf die Meßwertaufnehmer auf die Laufrollen als Meßwertaufnehmer ein. Um Drehungen des Spiegels um in der Ebene der Spiegelfläche liegende orthogonale Achsen zu erfassen, genügen zwei Rollen, die bevorzugt um zwei orthogonale, in der Ebene der Spiegelfläche liegende Achsen drehbar gelagert sind, so daß jede dieser Rollen eine dieser Drehungen erfaßt.

Im folgenden werden einige beispielhafte Ausführungsformen des erfindungsgemäßen Kraftfahrzeugspiegels beschrieben.
- Fig. 1: zeigt einen Schnitt eines verstellbaren Innenspiegels mit einer erfindungsgemäßen Vorrichtung von vorn und von oben; und
- Fig. 2: zeigt einen Schnitt eines verstellbaren Innenspiegels mit einer weiteren erfindungsgemäßen Vorrichtung von vorn und von oben.

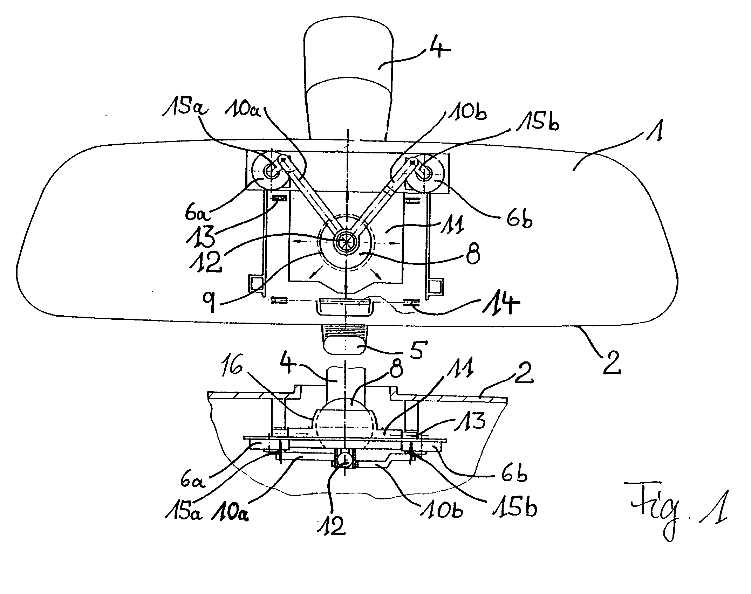

Fig. 1 zeigt einen verstellbaren Innenspiegel 1 mit einer Vorrichtung zur Erfassung der Stellung des Spiegels 1. Der Innenspiegel besitzt ein Gehäuse 2, das ein nicht dargestelltes Spiegelelement trägt, das das Gehäuse 2 zum Fahrer hin auf der gesamten Höhe und Breite des Spiegelgehäuses mit einer ebenen Spiegelfläche abgedeckt. Das Gehäuse ist über ein Lager 13 und ein Kniegelenk 14 an einem trägerartigen Befestigungselement 11 angelenkt. An dem Kniegelenk 14 ist ein Kipphebel 5 angebracht, der durch eine Öffnung aus dem Gehäuse 2 ragt. Das trägerartige Befestigungselement 11 weist eine Kalotte 16 für eine Kugel 9 auf, die fest mit einem Spiegelfuß 4 verbunden ist und mit dieser ein über vorbestimmte Winkelbereiche in sämtliche Drehrichtungen frei bewegliches Kugelgelenk 8 bildet. Der Innenspiegel 1 ist über den Spiegelfuß 4 fest am Fahrzeug montiert.

An dem trägerartigen Befestigungselement 11 sind ein erstes und ein zweites Drehpotentiometer 6a bzw. 6b links und rechts oberhalb des Kugelgelenkes 8 angebracht. Mit diesen Drehpotentiometern sind über radial von den Achsen der Drehpotentiometer nach außen sich erstreckende Hebelarme 15a und 15b zwei Koppelstangen 10a und 10b, vorzugsweise aus einem flachen Profil verbunden. Die Koppelstangen 10a und 10b sind an ihrem anderen Ende gemeinsam an einem Drehpunkt über ein Drehgelenk 12 an dem Spiegelfuß 4 angelenkt und streben V-förmig von diesem ausgehend zu den Drehpotentiometern 6a und 6b auseinander. Das Drehgelenk 12 besteht aus einer starr mit der Kugel 9 bzw. dem Spiegelfuß 4 verbundenen Kugel, die von den Koppelstangen 10a und 10b umfaßt wird.

Wird nun das Spiegelgehäuse 2 um eine Achse senkrecht zu der Normalen zur Spiegelfläche gedreht, so wird das Drehgelenk 12 seitlich ausgelenkt und die Koppelstangen 10a und 10b bewegen sich relativ zu den Drehpotentiometern 6a und 6b. Dadurch werden die Einstellungen und elektrischen Ausgangssignale der Drehpotentiometer 6a und 6b über die Hebelarme 15a und 15b in einer Weise verändert, die direkt auf die Bewegung des Spiegelgehäuses 2 schließen lassen. Dabei ist die Stellung des Spiegelgehäuses 2 und damit auch der Spiegelfläche durch die Stellung der Potentiometer 6a und 6b umkehrbar eindeutig bestimmt.

Durch diese besondere Form des Drehgelenkes 12 wirken sich jedoch Drehungen des Spiegels 1 um die Normale zur Spiegelfläche nicht auf die Stellung der Koppelstangen 10a und 10b aus, so daß derartige Drehungen, wie gewünscht, nicht erfaßt werden.

Wird der Spiegel 1 mit dem Kipphebel 5 von Tag- auf Nachtfahrt umgeschaltet, so dreht sich das Spiegelgehäuse 2 in dem Drehgelenk 13 und nimmt seine, über den Kipphebel 5 und das Kniegelenk 14 erzwungene gekippte Stellung ein. Da hierbei das trägerartige Befestigungselement 11 nicht bewegt wird, wird auch kein Signal erzeugt, das eine Veränderung der Stellung des Spiegels anzeigen würde.

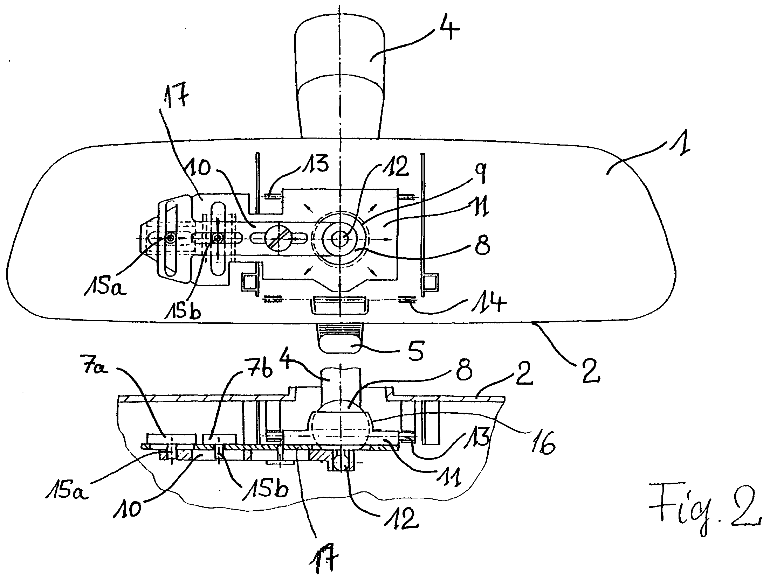

Fig. 2 zeigt einen Innenspiegel 1 für ein Kraftfahrzeug nch einem weiteren Ausführungsbeispiel. Gleiche Bezugszeichen bezeichnen dabei funktionell gleiche Teile wie Fig. 1. Das Gehäuse 2 des Spiegels 1 ist wiederum über ein Drehgelenk 13 und ein Kniegelenk 14 mit einem eine Kalotte 16 aufweisenden trägerartigen Befestigungselement 11 und dieses über eine in der Kalotte 16 aufgenommene Kugel 9 mit dem Spiegelfuß 4 verbunden. Seitlich der Kugel 9 des Kugelgelenks 8 und innerhalb des Gehäuses 2 sind zwei Schiebepotentiometer 7a und 7b an einer mit dem trägerartigen Befestigungsteil 11 verbundenen Platte 17 angebracht. Mit dem Spiegelfuß 4 ist weiterhin eine flache Koppelstange bzw. -platte 10 über ein Drehgelenk 12 verbunden, die sich im wesentlichen in der Ebene der Spiegelfläche erstreckt und über Verbindungsstifte 15a und 15b in die Schiebeelemente der Schiebepotentiometer 7a und 7b eingreift. Die Koppelstange 10 besitzt dort, wo sie über die Verbindungsstifte 15a und 15b in das Schiebeelement des Schiebepotentiometers 7b eingreift, eine sich in Längsrichtung der Koppelstange 10 erstreckende Öffnung und dort, wo sie in das Schiebeelement des Schiebepotentiometers 7a eingreift, eine sich quer zur Längsrichtung der Koppelstange 10 erstreckende Öffnung. Das Schiebepotentiometer 7a ist so angeordnet, daß sich sein Schiebeelement quer zur Längsrichtung der Koppelstange 10 bewegt und das Schiebepotentiometer 7b ist so angeordnet, daß sich sein Schiebeelement längs der Koppelstange 10 bewegt. Die Platte 17 und die Koppelstange 10 sind so flach, daß auch das Spiegelgehäuse 2 flach ausgebildet sein kann und seine Tiefe zu bekannten Spiegeln sich nicht oder nicht wesentlich erhöht.

Bei einer Drehung des Spiegelgehäuses 2 um eine von zwei zu der Normalen der Spiegelfläche senkrecht stehenden orthogonalen Achsen wird das Befestigungselement 11 relativ zu der Koppelstange 10 in Richtung der jeweils anderen Achse bewegt. Es ergibt sich bei diesen Bewegungen folglich eine Relativbewegung zwischen den an der Platte 17 bzw. dem Befestigungselement 11 befestigten Schiebepotentiometern 7a und 7b und der Koppelstange 10, die sich in dem Drehgelenk 12 relativ zum Spiegelfuß 4 dreht. Diese Relativbewegung führt zu einer Veränderung der Stellung der Schiebepotentiometer 7a und 7b, die umkehrbar eindeutig durch die Stellung des Spiegels 1 bezüglich dieser zwei Achsen bestimmt wird.

Wird beispielsweise der Spiegel 1 um die auf der Fahrbahnoberfläche und auf der Normalen der Spiegelfläche senkrecht stehenden Achse gedreht, so wird die Koppelstange 10 in ihrer Längsrichtung relativ zu der Platte 17 bewegt. Dadurch wird das Schiebepotentiometer 7a ausgelenkt, während das Schiebeelement des Schiebepotentiometers 7b in seiner Stellung unverändert innerhalb der längsgerichteten länglichen Öffnung in der Koppelstange 10 gleitet. Umgekehrt gleitet das Schiebelement des Schiebepotentiometers 7a in der quergerichteten länglichen Öffnung der Koppelstange 10, ohne seine Stellung zu verändern, wenn der Spiegel um die zur Fahrbahnoberfläche parallele und auf der Normalen zur Spiegelfläche senkrecht stehende Achse gedreht wird.

Eine Drehung des Spiegelrahmens 2 um die Normale zur Spiegelfläche führt zu keiner Verschiebung der Koppelstange 10 und des trägerartigen Befestigungselementes 11 relativ zueinander, so daß eine derartige Drehung nicht erfaßt wird.

Wie auch schon bei Fig. 1 beschrieben, führt eine Kippung des Spiegelrahmens 2 mit Hilfe des Kipphebels 5 ebenfalls zu keiner Bewegung des Befestigungselementes 11 oder des Spiegelfußes 4, so daß auch diese Bewegung nicht erfaßt wird.

Die Signale der Meßwertaufnehmer 6a, 6b, 7a und 7b in den Fign. 1 und 2 können dazu verwendet werden, Fahrzeugaußenspiegel automatisch den Veränderungen der Innenspiegelposition nachzufahren, so daß bei veränderter Sitzposition des Fahrers dieser lediglich den Innenspiegel von Hand neu einstellen muß.

Besonders vorteilhaft ist dabei, daß der Innenspiegel zur Nachtfahrt abgeblendet werden kann, ohne daß dabei beispielsweise die Stellung der Außenspiegel über eine automatische Steuerung in unerwünschter Weise verändert wird.

Weiterhin werden lediglich die für die Außenspiegelsteuerung wesentlichen Drehungen des Innenspiegels um die auf der Normalen zur Spiegelfläche senkrechten Achsen erfaßt.

Als weitere Ausführungsform der erfindungsgemäßen Vorrichtung können statt der Schiebepotentiometer der in Fig. 2 dargestellten Ausführungsform Hallelemente verwendet werden, auf die am Ende der Koppelstange 10 angeordnete, den Hallelementen räumlich zugeordnete magnetische Elemente einwirken. Bei entsprechender Beschaltung der Hallelemente können wiederum beliebige Bewegungen der Koppelstange 10 relativ zu dem Befestigungselement 11 in der Ebene der Spiegelfläche, aufgelöst in zwei orthogonale Komponenten, erfaßt werden.

Die für die Bestimmung der Spiegelposition wesentlichen Drehungen der Kugel 9 in der Kalotte 16 des Befestigungselementes 11 eines Spiegels wie in Fig. 1 kann auch durch zwei mit der Kugel 9 reibkraftschlüssig in Kontakt stehende Rollen als Drehungssensoren erfaßt werden. Diese Rollen werden ortsfest in der Kalotte 16 so angebracht, daß ihre Drehachsen orthogonal zueinander und parallel zu der Spiegelfläche liegen.

Als Meßwertaufnehmer können in weiteren Ausführungsbeispielen Kodierscheiben, auch in Kombination mit Drehpotentiometern, und/oder Reflexlichtschranken verwendet werden. Diese können auch mit den oben beschriebenen Meßwertaufnehmern kombiniert werden.

Die oben beschriebenen Ausführungsbeispiele beziehen sich auf einen Innenspiegel mit Abblendvorrichtung.

Die Meßwertaufnehmer bzw. die Einwirkelemente können auch an einem feststehenden, das heißt mit dem Spiegelgehäuse fest verbundenen trägerartigen Befestigungselement ohne die Kippvorrichtung zum Schwenken des Spiegelgehäuses zur Abblendung vorgesehen sein.

Aufgrund der erfindungsgemäßen Anordnung der Meßwertaufnehmer und Einwirkelemente in dem Spiegelgehäuse sind alls Meßelemente optisch verdeckt und es kann trotzdem ein flacher Innenspiegel zur Verfügung gestellt werden.

## Patentansprüche

1. Manuell verstellbarer Spiegel (1), der einen Spiegelfuß (4) und ein ein Spiegelelement aufnehmendes, relativ zu dem Spiegelfuß (4), drehbares Spiegelgehäuse (2) sowie mindestens einen Meßwertaufnehmer (6a,6b,7a,7b) und mindestens ein Einwirkelement (10,10a,10b,12) zum Einwirken auf den Meßwertaufnehmer (6a,6b,7a,7b), der die Stellung des Spiegels erfaßt, aufweist,
**dadurch gekennzeichnet ,**
**daß** das Spiegelgehäuse (2) über ein Befestigungselement (11) mit dem Spiegelfuß (4) verbunden ist, wobei das Befestigungselement (11) um mindestens zwei Achsen drehbar am Spiegelfuß angelenkt ist und das Spiegelgehäuse (2) um eine vorbestimmte Achse zu dem Befestigungselement (11) schwenkbar ist, und daß der mindestens eine Meßwertaufnehmer (6a,6b,7a,7b) und das mindestens eine Einwirkelement (10,10a,10b,12) im Spiegelgehäuse (2) angeordnet sind, wobei zur Erfassung der relativen Bewegung zwischen Befestigungselement und Spiegelfuß der Meßwertaufnehmer mit dem Befestigungselement (11) und das Einwirkelement mit dem Spiegelfuß (4) oder umgekehrt verbunden sind.

2. Spiegel nach Anspruch 1, **dadurch gekennzeichnet, daß** zwei Meßwertaufnehmer mit zugeordneten Einwirkelementen vorgesehen sind, die, in der Nähe zueinanderliegend, in dem Spiegelgehäuse angeordnet sind.

3. Spiegel nach Anspruch 1 oder 2, **dadurch gekennzeichnet, daß** die Meßwertaufnehmer und die Einwirkelemente Drehungen des Befestigungselementes (11) in bezug auf den Spiegelfuß (4) um in der Oberfläche des Spiegelelementes liegende Achsen erfassen.

4. Spiegel nach einem der Ansprüche 1 bis 3, **dadurch gekennzeichnet, daß** der mindestens eine Meßwertaufnehmer als Drehpotentiometer (6a,6b) oder Schiebepotentiometer (7a,7b) ausgebildet ist und das Einwirkelement mindestens eine Koppelstange (10,10a,10b) aufweisen, wobei letztere an dem Spiegelfuß (4) über ein Drehgelenk (12) angelenkt sind.

5. Spiegel nach Anspruch 4, **dadurch gekennzeichnet, daß** die mindestens eine Koppelstange (10,10a,10b) sich im wesentlichen in einer Ebene parallel zur Fläche des Spiegelelementes erstreckt.

6. Spiegel nach einem der Ansprüche 1 bis 3, **dadurch gekennzeichnet, daß** der mindestens eine Meßwertaufnehmer ein Hallelement und das mindestens eine Einwirkelement ein magnetisches Element aufweist.

7. Spiegel nach einem der vorhergehenden Ansprüche, **dadurch gekennzeichnet, daß** der Spiegelfuß (4) mit dem trägerartigen Befestigungselement (11) über ein Kugelgelenk (8) verbunden ist, wobei die Kugel (9) mit dem Spiegelfuß (4) und die Kalotte (16) mit dem Befestigungselement (11) oder umgekehrt fest verbunden sind.

8. Spiegel nach Anspruch 7, **dadurch gekennzeichnet, daß** an der Kalotte (16) des Kugelgelenkes (8) Laufrollen als Meßwertaufnehmer so angebracht sind, daß sie mit der Kugel (9) des Kugelgelenkes (8) reibkraftschlüssig verbunden sind.

9. Spiegel nach Anspruch 7, **dadurch gekennzeichnet, daß** die Drehachsen der Laufrollen im wesentlichen mit zwei orthogonalen Achsen übereinstimmen, die auf der Normalen zur Oberfläche des Spiegelelementes senkrecht stehen.

## Claims

1. Manually adjustable mirror (1) comprising a mirror foot (4) and a mirror housing (2), which accommodates a mirror element and which is rotary relative to the mirror foot (4), as well as at least one sensor (6a, 6b, 7a, 7b) and at least one active element (10, 10a, 10b, 12) which acts on the sensor (6a, 6b, 7a, 7b) which detects the position of the mirror, **characterised in that** the mirror housing (2) is connected to the mirror foot (4) via a fastening element (11), and the fastening element (11) is hinged to the mirror foot so as to be rotary around at least two axes, and the mirror housing (2) is pivotal relative to the fastening element (11) around a predetermined axis, and the at least one sensor (6a, 6b, 7a, 7b) and the at least one active element (10, 10a, 10b, 12) are arranged in the mirror housing (2), and the sensor is connected to the fastening element (11) and the active element to the mirror foot (4) or vice versa for the purpose of detecting the relative movement between fastening element and mirror foot.

2. Mirror according to Claim 1, **characterised in that** two sensors with associated active elements are provided which are arranged close to each other in the mirror housing.

3. Mirror according to Claim 1 or 2, **characterised in that** the sensors and the active elements detect rotations of the fastening element (11) relative to the mirror foot (4) around axes located in the surface of the mirror element.

4. Mirror according to one of Claims 1 to 3, **characterised in that** the at least one sensor is a rotary potentiometer (6a, 6b) or sliding potentiometer (7a, 7b), and the active element comprises at least one coupling bar (10, 10a, 10b), and the latter is hinged via a rotary joint (12) to the mirror foot (4).

5. Mirror according to Claim 4, **characterised in that** the at least one coupling bar (10, 10a, 10b) extends essentially in a plane parallel to the surface of the mirror element.

6. Mirror according to one of Claims 1 to 3, **characterised in that** the at least one sensor comprises a hall element and the at least one active element comprises a magnetic element

7. Mirror according to one of the above claims, **characterised in that** the mirror foot (4) is connected to the supporting fastening element (11) via a ball joint (8), and the ball (9) is firmly connected to the mirror foot (4) and the spherical indentation (16) to the fastening element (11) or vice versa.

8. Mirror according to Claim 7, **characterised in that** to the spherical indentation (16) of the ball joint (8) are attached rollers as sensors in such a manner that they are frictionally linked to the ball (9) of the ball joint (8).

9. Mirror according to Claim 7, **characterised in that** the rotary axes of the rollers essentially coincide with two orthogonal axes which stand vertically on the normal relative to the surface of the mirror element.

## Revendications

1. Rétroviseur (1) réglable manuellement, qui comporte un pied de rétroviseur (4) et un boîtier de rétroviseur (2), qui loge un élément formant miroir et peut tourner par rapport au pied (4) du rétroviseur, ainsi qu'au moins un enregistreur de valeurs de mesure (6a, 6b, 7a, 7b) et au moins un élément d'action (10, 10a, 10b; 12) destiné à agir sur l'enregistreur de valeurs de mesure (6a, 6b, 7a, 7b), qui détecte la position du rétroviseur,
**caractérisé en ce que** le boîtier (2) du rétroviseur est relié au pied (4) du rétroviseur par l'intermédiaire d'un élément de fixation (11), l'élément de fixation (11) étant articulé sur le pied du rétroviseur de manière à pouvoir tourner autour d'au moins deux axes, et le boîtier (2) du rétroviseur pouvant pivoter autour d'un axe prédéterminé par rapport à l'élément de fixation (11), et en ce que le au moins un enregistreur de valeurs de mesure (6a, 6b, 7a, 7b) et le au moins un élément d'action (10, 10a, 10b; 12) sont disposés dans le boîtier (2) du rétroviseur, l'enregistreur de valeurs de mesure étant relié à l'élément de fixation (11) et l'élément d'action étant relié au pied (4) du rétroviseur ou inversement, pour la détection du déplacement relatif entre l'élément de fixation et le pied du rétroviseur.

2. Rétroviseur selon la revendication 1,
**caractérisé en ce qu'**il est prévu deux enregistreurs de valeurs de mesure comportant des éléments d'action associés, qui sont disposés à proximité l'un de l'autre dans le boîtier du rétroviseur.

3. Rétroviseur selon la revendication 1 ou 2,
**caractérisé en ce que** les enregistreurs de valeurs de mesure et les éléments d'action détectent des rotations de l'élément de fixation (11) par rapport au pied (4) du rétroviseur autour d'axes situés dans la surface de l'élément formant miroir.

4. Rétroviseur selon l'une des revendications 1 à 3, **caractérisé en ce que** le au moins un enregistreur de valeurs de mesure est agencé sous la forme d'un potentiomètre rotatif (6a, 6b) ou d'un potentiomètre à curseur (7a, 7b) et que l'élément d'action possède au moins une tige d'accouplement (10, 10a, 10b), cette dernière étant articulée sur le pied (4) du rétroviseur par l'intermédiaire d'une articulation pivotante (12).

5. Rétroviseur selon la revendication 4, **caractérisé en ce que** la au moins une tige d'accouplement (10, 10a, 10b) s'étend sensiblement dans un plan parallèlement à la surface de l'élément formant miroir.

6. Rétroviseur selon l'une des revendications 1 à 3, **caractérisé en ce que** le au moins un enregistreur de valeurs de mesure comporte un élément de Hall et que le au moins un élément d'action est un élément magnétique.

7. Rétroviseur selon l'une des revendications précédentes, **caractérisé en ce que** le pied (4) du rétroviseur est relié à l'élément de fixation (11) en forme de support, par l'intermédiaire d'une articulation sphérique (8), la boule (9) étant reliée rigidement au pied (4) du rétroviseur et la calotte (16) étant reliée rigidement à l'élément de fixation (11) ou inversement.

8. Rétroviseur selon la revendication 7, **caractérisé en ce que** des galets de roulement sont disposés en tant qu'enregistreur des valeurs de mesure sur la calotte (16) de l'articulation sphérique (8) de telle sorte qu'ils sont reliés selon une liaison par friction à la boule (9) de l'articulation sphérique (8).

9. Rétroviseur selon la revendication 7, **caractérisé en ce que** les axes de rotation des galets de roulement sont essentiellement confondus avec deux axes orthogonaux, qui sont perpendiculaires à la normale de la surface de l'élément formant miroir.
